# EUROPEAN PATENT SPECIFICATION

(11) **EP 2 977 165 B1**
(45) Date of publication and mention of the grant of the patent: **06.03.2019**
(21) Application number: 13878630.6
(22) Date of filing: 29.04.2013
(51) Int. Cl.: B29C 33/30, B29C 49/48

(54) **RAPID MOULD CHANGE MECHANISM**
SCHNELLER FORMWECHSELMECHANISMUS
MÉCANISME DE CHANGEMENT RAPIDE DE MOULE

(30) Priority: 19.03.2013 CN 201310089091
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); Cai, Zhiyi, Zhangjiagang Jiangsu 215624 (CN); Wu, Yun, Zhangjiagang Jiangsu 215624 (CN); He, Deping, Zhangjiagang Jiangsu 215624 (CN)
(74) Representative: De Vries & Metman
(86) International application number: PCT/CN2013/075022
(87) International publication number: WO 2014/146331

(56) References cited:
- EP-A1- 2 554 357
- WO-A2-2004/106035
- CN-A- 101 961 890
- CN-A- 102 427 929
- CN-A- 102 427 929
- CN-A- 102 615 811
- CN-A- 102 615 811
- CN-U- 203 156 987
- CN-Y- 201 235 603
- FR-A1- 2 659 265
- US-A1- 2006 172 035
- US-A1- 2010 203 186

## Description

### Field of the Invention

The present invention relates to the field of beverage bottles manufacture equipment, particularly to a quick die changing mechanism.

### Description of the Related Art

A bottle blowing machine for processing of several kinds of bottle needs to equip with several kinds of bottle blowing die, and has to use different dies according to the different bottles .But now, fixed connection is often adopted between a die and a die shell being connected to the die, through bolts and nuts etc. During replacement, it is necessary to remove bolts and nuts, and then to replace and fix the die. On one hand, such replacement is very tedious, on the other hand, bolts and nuts are easy to lose after remove, both will affect the efficiency of die replacement.

All these features are known from No. WO 2004106035, No. CN 102615811, No. CN 102427929, No. US 2006182035 and No. US 2010203186.

### SUMMARY OF THE INVENTION

The present invention aims to provide a quick die changing mechanism, which can remove and install a die quickly.

To achieve the foregoing object, the present invention adopts a system according to claim 1.

Optionally, the connection piece is a bolt, whose first part is connected to a die shell through a nut fixedly, whose second part has a head at the outer end thereof having a plane opposite to the boss, when the die is separated from the bolt, the plane and the surface of the boss towards the bolt cooperate each other to slide, when the die is removed from the bolt.

Optionally, the external end face of the head of the bolt is flush with the end face of the boss closest to the outer side of the second connecting hole.

Optionally, a locking piece is connected to the external end face of the head of the bolt, and the rotation axis of the locking piece coincides with the axis of the bolt
Due to the use of the above technical proposals, the present invention has following advantages compared to prior art: through the cooperation between a boss and a locking piece, rapid die changing without need to disassemble the connecting piece can be realized, that is simple in structure, ease to operate, and quickly to change.

### Brief Description of the Drawings

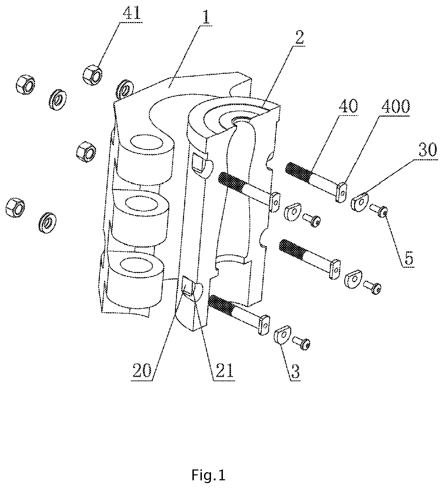

Figure 1 is an explosive view of the components in present invention.
Figure 2 is a schematic diagram of the status that a die is positioned relative to a die shell.
Figure 3 is a schematic diagram of the status that a die can be separated from a die shell.
wherein: 1.a die shell; 2. a die; 3.a second connecting hole; 21. a boss; 3.a locking piece; 30.a matching surface; 40.a bolt; 400.a head; 41.a nut; 5.a screw.

### Description of the Preferred Embodiments

Combined with the drawings and the preferred embodiments, the present invention is further described:
Fig.s 1-3 illustrate a embodiment according to the invention, this embodiment provides a rapid die changing mechanism which includes a die shell 1 arranged on the bottle blowing machine, a die 2 which can be connected to the die shell 1 in a replaceable mode , wherein a first connecting hole is formed in the die shell 1,a second connecting hole 20 is formed in the die 2, when the die 2 is connected to the die shell 1, a connecting piece is connected through the first connecting hole and the second connecting hole 20. A boss 21 is formed at the wall of the second connection hole 20 towards its center, locking piece 3 connected to the connecting piece rotates around a rotation axis to control the replacement of the die 2. When locking piece 3 blocks the boss 21, the die 2 is positioned relative to the die shell 1,and then die 2 can not be disassembled , when the locking piece 3 keeps away from the boss 21, the die 2 is separated from the die shell 1 along the direction of the axis of the connecting piece, and then the die 2 can be replaced.

The connecting piece includes a first part being fixedly connected to the die shell 1, and a second part being connected to the die in a removable mode, the maximum width of the second part is less than or equal to the aperture of the second connecting hole 20.

The aperture of the second connecting hole 20 mentioned here and elsewhere in present invention is the internal diameter of the second connecting hole 20 having no consideration about the boss 21.

The outermost edge of one side of the second part of the connecting piece against the boss 21, contacts the boss 21 or closer to the boss 21, compared to the axis of the second part.

The locking piece 3 being connected to the outer end of the second part, has two working statuses at least, when at the first working status, said locking piece 3 blocks the boss 21 at its outside to make the die 2 position relative to the die shell 1 ;when at the second working status ,the locking piece 3 keeps away from the said boss 21, so that the die 2 can move along the direction of the axis of the second part of the connecting piece to depart from the die shell 1.

Specifically: in present embodiment, bolt 40 and nut 41 are selected as the connecting piece to match each other, the die shell 1 and die 2 is connected through the bolt 40 and nut 41, and when connecting, the upper outer end face of the head 400 of the bolt 40 is flush with the side end face of the boss 21 closest to the outside of the connecting hole 20. The locking piece 3 is connected to the outer end face of the head 400 of the nut 40 through the screw 5, this kind of connection allows the locking piece 3 to rotate relative to nut 40,when the screw 5 has not been fully tightened.

The vertical section is an arc surface consisting of a circular arc and a line segment that connects two endpoints of the circular arc, the rotation axis of the locking piece is the center line of the arc surface. The vertical section of the locking piece 3 corresponding to the line segment is a matching surface 30 ,whose shape and position matched with the boss 21 through the following way: when the locking piece 3 at the second working status , projections of the matching surface 30 and the surface being towards the connecting piece of the boss 21 on a plane that is perpendicular to the axis of the second part of the connecting piece, contact each other, or gap exists between projections; when the locking piece 3 at the first working status, projections of the locking piece 3 and the boss 21 on a plane that is perpendicular to the axis of the second part of the connecting piece partially overlap at least.

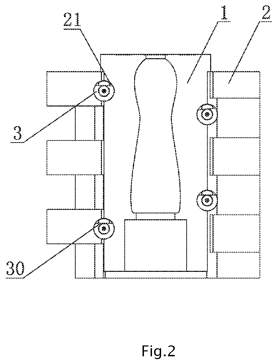

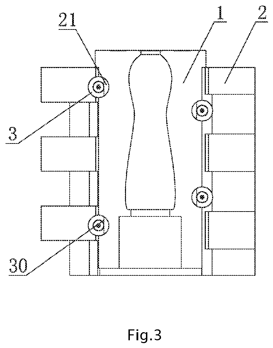

The locking piece 3 rotates, when the matching face 30 of the locking piece 3 is opposite to the boss 21,the locking piece keeps away from the boss 21, the die 2 can be separated from the bolt 40 along the direction of the axis of the bolt 40,and then die 2 can be replaced , as shown in Fig.2; when the locking piece 3 blocks the boss 21,as shown in Fig.3,the die 2 is positioned relative to the die shell 1,and then the die 2 can not be disassembled. The screw 5 can also be tightened, which can prevent the rotation of the locking piece 3 and improve the stability of the locking piece 3. When changing die 2, after the separation of old die from die shell 1,a bolt through the connecting hole20 of a new die, makes the outer end face of the head 400 of the bolt 40 flush with the outmost side face of the boss 21,and then the locking piece 3 rotates, so that it can block the boss 21 partially at least, and now, the die 2 is positioned relative to the die shell 1,and then tighten the screw 5, nut41, the bottle blowing machine can began processing.

The aim of the above embodiments is intend to illustrate the inventive concept and characteristics of present invention, to enable a person skilled in the art to appreciate the content of the invention and further implement it, and the protecting scope of the invention can not be limited hereby.

## Claims

1. A system comprising:
- a bottle blow moulding machine,
- a quick die changing mechanism, including :
- a die shell (1) arranged on a bottle blowing machine,
- a die (2),
- a first connecting hole is formed in the die shell (1);
- a second connecting hole (20) is formed in the die (2),
- a connecting piece connects the die shell (1) and the said die (2) through the first and second connecting holes, wherein, the connecting piece comprises a first part and a second part, the die shell (1) is connected to the first part fixedly, the die (2) is connected to the second part in a removable mode, and the maximum width of the second part is less than or equal to the second connecting hole aperture,
- a boss is formed at the wall of the second connection hole towards its center, the outermost edge of one side of the second part of the connecting piece against the boss, contacts with the boss or closer to the axis of the second part, compared to the boss,
- a locking piece connected to the outer end of the second part rotates around a rotation axis, the locking piece has two working statuses at least, wherein
- at the first working status, the locking piece blocks the boss at the outside of the boss, so that the die is positioned relative to the die shell; and
- at the second working status, the locking piece keeps away from the boss, so that the die can move along the direction of the axis of the second part of the connecting piece to depart from the die shell,
the system being **characterized in that**:
- the vertical section of the locking piece (3) is an arc surface consisting of a circular arc and a line segment that connects two endpoints of the circular arc, the vertical section of the locking piece (3) consisting of line segment is a matching surface (30), whose shape and position matched with the boss (21),
- when the locking piece at the second working status , projections of the matching surface (30) and the surface of the boss (21) being towards the connecting piece on a plane that is perpendicular to the axis of the second part of the connecting piece, contact each other, or gap exists between projections;
- when the locking piece (30) at the first working status, projections of the locking piece (3) and the boss (21) on a plane that is perpendicular to the axis of the second part of the connecting piece partially overlap at least.

2. The system as claimed in claim 1, wherein: the connecting piece is a bolt (40), the first part of the bolt (40) is connected to the die shell (1) fixedly, the outer end of the second part of the bolt (40) has a head (400), the head (400) has a plane that is opposite to the boss (21), when the die (2) is separated from the bolt (40), the plane and the surface of the boss (21) towards the bolt cooperates each other to slide, when the die (2) is separated from the bolt (40).

3. The system as claimed in claim 2, wherein: the external end face of the head (400) of the bolt (40) is flush with the end face of the boss (21) closest to the outer side of the second connecting hole (20).

4. The system as claimed in claim 3, wherein: the locking piece (3) is connected to the external end face of the head (400) of the bolt (40) and the rotation axis of the locking piece (3) coincides with the axis of the bolt.

## Patentansprüche

1. System, das aufweist:
- eine Flaschenblasformmaschine,
- einen Mechanismus zum schnellen Werkzeugwechsel, der beinhaltet:
- einen Werkzeugmantel (1), der an einer Flaschenblasmaschine angeordnet ist,
- ein Werkzeug (2),
- ein erstes Verbindungsloch ist im Werkzeugmantel (1) gebildet;
- ein zweites Verbindungsloch (20) ist im Werkzeug (2) gebildet,
- ein Verbindungsstück verbindet den Werkzeugmantel (1) und das Werkzeug (2) durch das erste und zweite Verbindungsloch, wobei das Verbindungsstück einen ersten Teil und einen zweiten Teil aufweist, der Werkzeugmantel (1) mit dem ersten Teil fest verbunden ist, das Werkzeug (2) mit dem zweiten Teil entfernbar verbunden ist und die maximale Breite des zweiten Teils gleich oder kleiner als die Öffnung des zweiten Verbindungslochs ist,
- ein Vorsprung ist an der Wand des zweiten Verbindungslochs zu seiner Mitte gebildet, die äußerste Kante einer Seite des zweiten Teils des Verbindungsstücks gegen den Vorsprung kontaktiert den Vorsprung oder liegt näher zur Achse des zweiten Teils verglichen mit dem Vorsprung,
- ein Verriegelungsstück, das mit dem Außenende des zweiten Teils verbunden ist, dreht um eine Drehachse, das Verriegelungsstück hat mindestens zwei Arbeitszustände, wobei
- im ersten Arbeitszustand das Verriegelungsstück den Vorsprung an der Außenseite des Vorsprungs blockiert, so dass das Werkzeug relativ zum Werkzeugmantel positioniert ist; und
- sich im zweiten Arbeitszustand das Verriegelungsstück von dem Vorsprung fernhält, so dass sich das Werkzeug entlang der Richtung der Achse des zweiten Teils des Verbindungsstücks bewegen kann, um sich vom Werkzeugmantel zu entfernen,
wobei das System **dadurch gekennzeichnet ist, dass**
- der Senkrechtschnitt des Verriegelungsstücks (3) eine Bogenfläche ist, die aus einem Kreisbogen und einem Liniensegment besteht, das zwei Endpunkte des Kreisbogens verbindet, wobei der aus dem Liniensegment bestehende Senkrechtschnitt des Verriegelungsstücks (3) eine Passfläche (30) ist, deren Form und Position an den Vorsprung (21) angepasst ist,
- im zweiten Arbeitszustand des Verriegelungsstücks Projektionen der Passfläche (30) und der Oberfläche des Vorsprungs (21) zum Verbindungsstück auf einer Ebene liegen, die senkrecht zur Achse des zweiten Teils des Verbindungsstücks ist, einander kontaktieren, oder ein Spalt zwischen Projektionen vorhanden ist;
- im ersten Arbeitszustand des Verriegelungsstücks (30) Projektionen des Verriegelungsstücks (3) und des Vorsprungs (21) auf einer Ebene, die senkrecht zur Achse des zweiten Teils des Verbindungsstücks ist, sich mindestens teilweise überlappen.

2. System nach Anspruch 1, wobei: das Verbindungsstück ein Bolzen (40) ist, der erste Teil des Bolzens (40) mit dem Werkzeugmantel (1) fest verbunden ist, das Außenende des zweiten Teils des Bolzens (40) einen Kopf (400) hat, der Kopf (400) eine Ebene hat, die entgegengesetzt zum Vorsprung (21) ist, wenn das Werkzeug (2) vom Bolzen (40) getrennt wird, die Ebene und die Oberfläche des Vorsprungs (21) zum Bolzen zusammenwirken, um zu gleiten, wenn das Werkzeug (2) vom Bolzen (40) getrennt wird.

3. System nach Anspruch 2, wobei: die Außenendfläche des Kopfs (400) des Bolzens (40) bündig mit der Endfläche des Vorsprungs (21) am nächsten zur Außenseite des zweiten Verbindungslochs (20) ist.

4. System nach Anspruch 3, wobei: das Verriegelungsstück (3) mit der Außenendfläche des Kopfs (400) des Bolzens (40) verbunden ist und die Drehachse des Verriegelungsstücks (3) mit der Achse des Bolzens zusammenfällt.

## Revendications

1. Système comprenant :
- une machine de moulage par soufflage de bouteille,
- un mécanisme de changement de filière rapide, comportant :
- une coquille de filière (1) agencée sur une machine de soufflage de bouteille,
- une filière (2),
- un premier trou de raccordement est formé dans la coquille de filière (1) ;
- un second trou de raccordement (20) est formé dans la filière (2),
- une pièce de raccordement raccorde la coquille de filière (1) et ladite filière (2) par l'intermédiaire desdits premier et second trous de raccordement, dans lequel, la pièce de raccordement comprend une première partie et une seconde partie, la coquille de filière (1) est raccordée à la première partie à demeure, la filière (2) est raccordée à la seconde partie en mode amovible, et la largeur maximale de la seconde partie est inférieure ou égale à l'orifice du second trou de raccordement,
- un bossage est formé au niveau de la paroi du second trou de raccordement vers son centre, le bord le plus extérieur d'un côté de la seconde partie de la pièce de raccordement contre le bossage, vient en contact avec le bossage ou plus près de l'axe de la seconde partie, en comparaison au bossage,
- une pièce de verrouillage raccordée à l'extrémité extérieure de la seconde partie tourne autour d'un axe de rotation, la pièce de verrouillage a deux statuts de fonctionnement au moins, dans lequel
- dans le premier statut de fonctionnement, la pièce de verrouillage bloque le bossage à l'extérieur du bossage, de sorte que la filière soit positionnée par rapport à la coquille de filière ; et
- dans le second statut de fonctionnement, la pièce de verrouillage reste à l'écart du bossage, de sorte que la filière puisse se déplacer suivant la direction de l'axe de la seconde partie de la pièce de raccordement pour quitter la coquille de filière,
le système étant **caractérisé en ce que** :
- la section verticale de la pièce de verrouillage (3) est une surface en arc consistant en un arc circulaire et un segment de ligne qui raccorde deux points d'extrémité de l'arc vertical, la section verticale de la pièce de verrouillage (3) consistant en un segment de ligne est une surface concordante (30), dont la forme et la position concordent avec le bossage (21),
- lorsque la pièce de verrouillage est dans le second statut de fonctionnement, les saillies de la surface concordante (30) et de la surface du bossage (21) étant vers la pièce de raccordement sur un plan qui est perpendiculaire à l'axe de la seconde partie de la pièce de raccordement, viennent en contact les unes avec les autres, ou un jeu existe entre des saillies ;
- lorsque la pièce de verrouillage (30) est dans le premier statut de fonctionnement, des saillies de la pièce de verrouillage (3) et du bossage (21) sur un plan qui est perpendiculaire à l'axe de la seconde partie de la pièce de raccordement se chevauchent au moins partiellement.

2. Système selon la revendication 1, dans lequel : la pièce de raccordement est un boulon (40), la première partie du boulon (40) est raccordée à demeure à la coquille de filière (1), l'extrémité extérieure de la seconde partie du boulon (40) comporte une tête (400), la tête (400) a un plan qui est opposé au bossage (21), lorsque la filière (2) est séparée du boulon (40), le plan et la surface du bossage (21) vers le boulon coopèrent l'un avec l'autre pour coulisser, lorsque la filière (2) est séparée du boulon (40).

3. Système selon la revendication 2, dans lequel : la face d'extrémité externe de la tête (400) du boulon (40) est au droit de la face d'extrémité du bossage (21) le plus près du côté extérieur du second trou de raccordement (20).

4. Système selon la revendication 3, dans lequel : la pièce de verrouillage (3) est raccordée à la face d'extrémité externe de la tête (400) du boulon (40) et l'axe de rotation de la pièce de verrouillage (3) coïncide avec l'axe du boulon.
